# EUROPEAN PATENT APPLICATION

(11) **EP 4 830 856 A1**
(43) Date of publication of application: **28.10.2026**
(21) Application number: 25172400.1
(22) Date of filing: 24.04.2025
(51) Int. Cl.: B23G 1/36

(54) **METHOD AND APPARATUS FOR PRODUCING AN INTERNAL THREAD IN A WORKPIECE**

(71) Applicant: Viking CNC Prague a.s., 19700 Prague 9 (CZ)
(72) Inventor: Meier, Christoph, 4543 Deitingen (CH); Pfaff, Edgar, 72461 Albstadt (DE)
(74) Representative: Hepp Wenger Ryffel AG

(57) **Abstract**

A method for producing an internal thread in a through hole of a workpiece using a threading tool, preferably a thread grinding tool. The method comprises the steps of: machining a first thread segment of the internal thread from a first opening of the through hole; and machining a second thread segment of the internal thread from a second opening of the through hole. The machining of the first thread segment and second thread segment is performed such that the first and second thread segments are aligned, preferably in radial and/or axial directions relative to each other.

## Description

The present invention relates to a method and an apparatus for producing an internal thread in a through hole of a workpiece, a computer-implemented method for controlling an apparatus for producing an internal thread in a through hole of a workpiece, as well as to a data processing system, a computer program, and a computer-readable medium.

Internal threads with a high aspect ratio, defined by a significant depth-to-diameter ratio, are essential in many technical applications, such as aerospace, medical devices, and advanced machinery, where precise connections are critical. While various methods like tapping, single-point threading, and thread milling can be employed for creating internal threads, grinding offers significant advantages in terms of precision and surface quality, especially for materials that demand stringent tolerances. However, grinding such high aspect ratio internal threads presents several unique challenges.

Grinding internal threads with high aspect ratios typically requires the use of a grinding wheel mounted on a long arbour. To grind the desired thread profile, the grinding tool must be positioned at an angle to the longitudinal axis of the bore. This angular positioning means that the arbour must be slender to avoid colliding with the bore wall. However, this slenderness limits the arbour's rigidity, particularly when the aspect ratio exceeds a value of about 5:1. The lack of rigidity makes the grinding process more prone to inaccuracies due to tool deflection, which compromises thread quality. Additionally, a slender arbour becomes more susceptible to vibrational instability.

These vibrations can severely impact the surface finish and dimensional accuracy of the threads, and, in extreme cases, can even lead to damage or failure of the grinding tool itself. As a result, only limited grinding speeds can be achieved, which in turn extends the machining time and reduces efficiency. Therefore, achieving the right balance between shaft diameter, rigidity, and depth access remains a significant hurdle in the grinding of high aspect ratio internal threads.

The problem of grinding high aspect ratio internal threads by proposing a parallel axis grinding method is addressed in CN 108620693 A (HARBIN INST TECHNOLOGY, 09 October 2018). In this approach, the grinding wheel's rotation axis is kept parallel to the axis of the thread being processed, which helps avoid collisions between the grinding wheel arbour and the walls of the bore. The grinding is performed using a diamond grinding wheel, with specific steps to control eccentric distance and minimize interference errors. This setup allows for deeper grinding without tool collision, enhancing efficiency. However, the disadvantages of this method include potential interference between the grinding wheel and the internal thread because the grinding wheel's shaft gets in close proximity to the thread during the grinding process. This can lead to deviations from desired tolerances. Furthermore, the process requires a grinding wheel specifically shaped for this method. Also, this grinding setup places additional lateral forces on the grinding tool, increasing the risk of deflection, vibrations, and too instability. In CN 108620693 A (HARBIN INST TECHNOLOGY, 09 October 2018), it is not specified what aspect ratio can be achieved by this method. However, the inventors of the present invention have found that with such a parallel grinding setup, depth-to-diameter aspect ratios of only at most 5:1 can reasonably be achieved without compromising accuracy.

The problem is particularly pronounced when the material to be processed is especially hard. As particularly strong forces are required to produce the thread in this case, the resulting inaccuracies are particularly exacerbated at high aspect ratios of the through hole.

It is therefore an object of the present invention to overcome at least some, if not all shortcomings of prior art methods. In particular, it is an object to provide a machining solution for high aspect ratio internal threads without compromising machining speed, efficiency, surface quality, lead angle, and dimensional accuracy, preferably wherein the material to be machined is a hard material.

The problem is solved by a method and an apparatus for producing an internal thread in a through hole of a workpiece, a computer-implemented method for controlling an apparatus for producing an internal thread in a through hole of a workpiece, a data processing system, a computer program, and a computer-readable medium, according to the independent claims. Advantageous embodiments and further developments are the subject of the dependent claims.

A first aspect of the invention relates to a method for producing an internal thread in a through hole of a workpiece using a threading tool, preferably a thread grinding tool. The method comprising the following steps:
- machining a first thread segment of the internal thread from a first opening of the through hole; and
- machining a second thread segment of the internal thread from a second opening of the through hole.

The machining of the first thread segment and second thread segment is performed such that the first and second thread segments are aligned, preferably in radial and/or axial directions relative to each other.

In the context of the present invention, an internal thread is a helical groove cut into the interior surface of a bore, in the present case a through hole. The internal thread can extend along the entire through hole or just a part of it.

A through hole is a type of hole or bore that passes completely through a workpiece. Through holes are distinct from blind holes, which do not go all the way through the material but instead have a defined depth that is shorter than the corresponding thickness of the workpiece.

Preferably, the through hole is a cylindrical and/or tapered through hole, more preferably a cylindrical through hole. A cylindrical through hole results in a cylindrical internal thread; a tapered through hole results in a tapered internal thread. The through hole may also comprise both a cylindrical section and a tapered section.

In the context of the present invention, a workpiece is any object in which a high aspect ratio internal thread is to be formed. Examples include metal components, nuts, and hollow mechanical parts. Particular materials for the surface of the through hole to be threaded are specified further below. The material of the threaded through hole and the rest of the workpiece may be the same or different, depending on the application.

A threading tool is a device known to the skilled person used to form threads on the interior or exterior of a workpiece. Preferably, the threading tool is selected from the group consisting of: a thread grinding tool, a threading tap, a thread mill, a thread rolling tool, and a single-point threading tool; preferably a thread grinding tool.

A thread grinding tool is a device known to the skilled person and used to create threads by removing material through an abrasive grinding process. It typically comprises a grinding wheel mounted on an arbour, configured to match the desired thread profile. The tool rotates at high speed while the tool and the workpiece are in relative motion to each other to shape the internal threads. The longitudinal axis of the thread grinding tool and the longitudinal axis of the through hole are thereby typically not parallel to each other. In particular, the threading tool rotates around its longitudinal axis, and the workpiece is rotated around the longitudinal axis of the through hole. The workpiece and the thread grinding tool are moved relative to each other in such a way that the first and second thread segments are machined.

In the context of the present invention, an internal thread is an internal screw thread.

In the context of the present invention, the first thread segment extends within a first portion of the through hole of the workpiece. The first thread segment is formed while the threading tool is inserted into the first opening of the through hole. The first thread segment may, but need not, start at this first opening. The same applies to the second thread segment, which extends within a second section of the through hole of the workpiece. It is formed while the threading tool is inserted into the second opening of the through hole. The second thread segment can, but does not have to, start at this second opening. The first and second thread segments are directly adjacent to each other and form the internal thread in the through hole. There may be an overlap between the first thread segment and the second thread segment.

The machining of the first and second thread segments can be carried out using a procedure known to the skilled person. The thread segments may also be produced in partial steps, wherein, for example, the two thread segments are machined multiple times alternately. This is described in more detail below. When the machining is changed from the first thread segment to the second thread segment and vice versa, the workpiece is preferably displaced and rotated while the longitudinal axis of the threading tool is not displaced or rotated.

One difficulty in manufacturing an internal thread comprising two thread segments is to match the two thread segments to each other in such a way that they form a continuous internal thread into which a workpiece with a corresponding external thread can be screwed without causing a blockage at the transition from the first to the second thread segment. To achieve this, the first and second thread segments must be aligned to each other within a predefined tolerance range, preferably in radial and/or axial direction. The predefined tolerance range is determined in particular by the thread dimensions, the materials and the intended use; and can be specified by the skilled person.

In the context of the present invention, the first and second thread segments are aligned, preferably in radial and/or axial direction, if at least one, preferably the majority, most preferably all of the conditions is/are fulfilled selected from the group comprising or consisting of:
- a radial distance between a longitudinal axis of the first thread segment and a longitudinal axis of the second thread segment is within a predefined range, preferably at least at one point, preferably at more than one point along said longitudinal axes;
- a radial distance between a longitudinal axis of the through hole and a longitudinal axis of the first thread segment and/or a longitudinal axis of the second thread segment is within a predefined range;
- an angle between a longitudinal axis of the first thread segment and a longitudinal axis of the second thread segment is within a predefined range;
- an angle between a longitudinal axis of the through hole and a longitudinal axis of the first thread segment and/or a longitudinal axis of the second thread segment is within a predefined range;
- a difference between a radial depth of the first thread segment and a radial depth of the second thread segment is within a predefined range;
- a difference between a diameter of the first thread segment and a diameter of the second thread segment is within a predefined range, in particular diameters selected from the group consisting of: outer diameter, core diameters, and flank diameters;
- an axial distance between the first thread segment and a second thread segment, in particular between an end point of the first thread segment and an end point of the second thread segment, is within a predefined range;
- a rotational offset angle between the first thread segment and a second thread segment is within a predefined range;
- a difference between a pitch of the first thread segment and a pitch of the second thread segment is within a predefined range;
- a difference between a pitch of the first thread segment and a pitch of the second thread segment is within a predefined range;
- a cumulative pitch error of the first thread segment and/or the second thread segment is/are within a predefined range;
- a difference between a lead of the first thread segment and a lead of the second thread segment is within a predefined range;
- a difference between a lead angle of the first thread segment and a lead angle of the second thread segment is within a predefined range; and
- a difference between a thread form of the first thread segment and a thread form of the second thread segment is within a predefined tolerance.

In the context of the present invention, a majority indicates more than half of a total number.

The purpose of this alignment is to adjust the two thread helices of the first and second thread segments so that they essentially merge seamlessly into one another and thus form a continuous thread.

Unless otherwise stated, the terminology for screw threads is as defined in the ISO 5408:2009 standard, which is incorporated here by reference.

A radial depth of a thread segment is the difference between the outer diameter (major diameter; the largest diameter of a thread) and the core diameter (minor diameter; the smallest diameter of a thread) of a thread, divided by two. The flank diameter, also known as pitch diameter or pitch circle diameter (PCD), is the diameter of an imaginary cylinder (in case of a cylindrical thread) passing through the threads at the point where the thread's groove is theoretically divided into equal sections.

The lead of a thread is the distance along the thread's axis that is covered by one complete rotation of the thread (360°). The pitch is the distance from the crest of one thread to the next one at the same point. For a single-start threadform, the lead and pitch are the same.

A cumulative pitch error is the total deviation in the distance between successive thread peaks over the entire length of a threaded segment. It occurs when small inaccuracies in the spacing of individual thread pitches accumulate, leading to misalignment and potential issues with proper engagement or fitting of the mating components. To ensure that the first and second thread segments are aligned with each other, especially in axial direction, the cumulative pitch error of both thread segments has to be low.

In the context of the present invention, a rotational offset angle between the first thread segment and the second thread segment is defined as the angular difference in alignment between the two segments. In this case, the two thread segments do have different entry points. A rotational offset angle can be measured by thread pitch measurement tools or rotary encoders. The goal is a low, preferably no rotational offset angle. A rotational offset angle that is too high can be corrected, for example, by adjusting the axial position of the thread segments relative to each other.

A lead angle φ is determined according to the formula $φ = arctan \left(\frac{n \times P}{π \times {d}_{P}}\right)$ (Formula 1), wherein n is the number of starts of the thread, P is the pitch of the thread, d_{P} is the pitch diameter of the thread.

A thread form is the specific shape and geometry of the thread profile, including its cross-sectional shape, angle, and depth. It defines the characteristics of the helical ridge, such as the pitch, flank angles, crest, and root, which determine how the thread will engage with its mating counterpart. Common thread forms include triangular, square, and trapezoidal shapes.

In order to achieve alignment, preferably in radial and/or axial direction, the thread segments are measured during machining, for example, in order to align them with each other. This is described in more detail below.

In the context of the present invention, the term "or" is to be understood as an exclusionary disjunction. "A or B" states that exactly one of the two statements is true (if the disjunction is true).

The method according to the invention can be used to produce, in particular grind, internal threads in a through-hole with a high aspect ratio, as the internal thread is produced from both sides of the through hole. If a thread grinding tool is used, the grinding mandrel only needs to be half the length of a grinding mandrel required for the same thread depth in the prior art. The shorter grinding mandrel leads to fewer inaccuracies due to tool deflection and is less prone to vibrational instability. The grinding arbour is therefore more stable and can therefore achieve a higher removal rate due to a higher rotational speed of the threading tool. This leads to a significantly enhanced efficiency of the threading process. The inventors have found that the speed of a grinding process can be significantly increased with the method according to the invention. The shorter abrasive mandrel lengths also mean that a higher lead angle can be used. This makes the method according to the invention particularly suitable for machining particularly hard materials and for producing particularly fine structures.

A particular challenge in this process is that the two internal thread segments must be precisely aligned so that a component with a corresponding external thread can be screwed in. It is accordingly a subordinate object of the present invention to provide a machining solution for high aspect ratio internal threads in which the internal thread has as few defects as possible, in particular in which the internal thread is as uniform as possible throughout.

Therefore, in a preferred embodiment of the method of the first aspect, the first thread segment and the second thread segment are aligned, preferably in radial and/or axial directions relative to each other, by performing a coarse machining step of the first thread segment; performing a coarse machining step of the second thread segment; performing a fine machining step of the first thread segment; and performing a fine machining step of the second thread segment. At least one deviation value determined after performing the coarse machining steps is reduced by performing the fine machining steps.

In the context of the present invention, a coarse machining step of a thread segment is a machining step that precedes a fine machining step of said thread segment; a fine machining step of a thread segment is a step that follows a coarse machining step of said thread segment. The terms 'coarse' and 'fine' refer to the alignment of the thread segments, in particular the alignment of the thread segments in radial and/or axial directions relative to each other; in particular, the terms do not refer to the surface finish, for example the surface roughness of the thread segments.

The coarse machining steps of the first and second thread segments may or may not be the two first machining steps in the overall process.

For example, the method may be as follows. First a coarse machining step is performed on the first thread segment, then a coarse machining step is performed on the second thread segment. Then a deviation value, for example a radial offset between the first and second thread segment (see below), is measured using a thread inspection tool. The fine machining step is then carried out on the second thread segment, followed by the fine machining step on the first thread segment (or vice versa). If the deviation value is outside a predefined tolerance range, the two fine machining steps are carried out in order to reduce the deviation value, preferably to reduce it to within the tolerance range.

Alternatively, the method may be as follows. The method involves a multitude of machining steps per thread segment. At least one deviation value is determined before the second-last machining step. A machining step is then performed on both thread segments in order to reduce the deviation value. In relation to all previous steps, the second-last machining step is a fine machining step. In relation to the subsequent, last machining step, the second-last machining step is a coarse machining step. Before the last machining step, at least one more deviation value is determined, which is further reduced in the last machining step (a fine machining step compared to the previous one).

A deviation value may also be determined between a machining step of the first thread segment and a machining step of the second thread segment.

In the context of the present invention, a deviation value is a deviation selected from the list comprising or consisting of:
- a deviation between a measured value and a setpoint value;
- a deviation between a measured value of the first thread segment and a measured value of the second thread segment; and
- a deviation between a measured value of a thread segment and a measured value of the workpiece (including the through hole).

A deviation value may be zero. In this case, the deviation value does not have to be further reduced.

In any aspect, the aligning of the thread segments may be done, for example, by adjusting the relative angle and relative position between the threading tool and the through hole of the workpiece, by adjusting the radial depth of the subsequent machining steps, by adjusting the rotational speed of the threading tool (in case of a thread grinding tool, the grinding speed), and by adjusting the infeed. To align the workpiece with the threading tool, and to control the thread machining process, acoustic sensors may be used.

The threading tool, in particular when the threading tool is a thread grinding tool, may be resharpened during the process, for example between two of the above-mentioned machining steps. This process is also called dressing. During this process, the surface of the threading tool is slightly trimmed.

A single threading tool may be used throughout the process, but different threading tools may also be used.

The first and second thread segments can be aligned particularly well using the iterative method according to the above-described preferred embodiment of the invention.

In a preferred embodiment of the above-described embodiment, after the fine machining steps, the method includes one or more subsequent finer machining steps alternately on the first thread segment and the second thread segment.

In a preferred embodiment of the method of the first aspect of the invention, the first thread segment is machined to a coarse radial depth in a or the coarse machining step of the first thread segment, and the second thread segment is machined to the coarse radial depth in a or the coarse machining step of the second thread segment; wherein the coarse radial depth is smaller than a final radial depth of the internal thread.

In the context of the present invention, a final radial depth is the value for the radial depth after the very last machining step of the method, which is preferably within a tolerance range for the target value of the radial depth.

Preferably, the coarse radial depth is from 20 % to 80 % of the final radial depth, more preferably the coarse radial depth is from 35 % to 65 % of the final radial depth, even more preferably the coarse radial depth is from 45 % to 55 % of the final radial depth, most preferably the coarse radial depth is about 50 % of the final radial depth.

There may also be further machining steps before the above-mentioned one, with a lower radial depth than in the above-mentioned step. Preferably, between the machining step that leads to the above-mentioned coarse radial depth and a final machining step, further machining steps are carried out, in each of which the radial depth is further increased until the final radial depth is reached.

This procedure, in which the radial depth of the thread segments is continually increased, enables the thread segments to be aligned iteratively with the individual machining steps. In this way, any deviation values that are too high (as determined between the machining steps) can be compensated for by equalising the machining of the radial depth in the subsequent steps.

In a further preferred embodiment of the first aspect of the invention, an angle between a longitudinal axis of the threading tool and a vertical machining position is less than 5°, preferably is less than 3°, more preferably is less than 1°, most preferably is essentially 0° during the machining of the first and second thread segments.

With an angle of essentially 0°, the angle lies within an acceptable tolerance range for the respective method and for the internal thread to be produced.

In the context of the present invention, a vertical machining position means that the longitudinal axis of the threading tool is parallel to the direction of gravity between the earth and the threading tool.

This arrangement ensures that the threading tool is arranged essentially vertically during the machining of the thread segments. Typically, the through-hole of the workpiece is then held at an angle to the threading tool during machining. In prior art apparatuses the threading tool is arranged horizontally. The inventors of the present application have surprisingly found that in this horizontal grinding arrangement, gravity influences the grinding results much stronger than initially expected. They have further found that an essentially vertical arrangement of the threading tool leads to much lower vibrations of the tool. Firstly, this leads to a higher accuracy of the thread machining process; secondly, much higher turning speeds can be achieved, which is particularly advantageous when grinding threads. This is because higher turning speeds increase throughput and therefore efficiency.

In another preferred embodiment of the first aspect, a longitudinal axis of the threading tool and a longitudinal axis of the through hole are not parallel, preferably an angle between the longitudinal axis of the threading tool and the longitudinal axis of the through hole is at least 0.01°, preferably is at least 0.1°, more preferably is at least 1°, even more preferably is at least 10°, most preferably at least 20°.

Preferably, the angle between the longitudinal axis of the threading tool and the longitudinal axis of the through hole is from 0.01° to 20°.

This requirement makes it particularly challenging to create internal threads with a high aspect ratio, as the threading tool can only have a maximum length for a given width so that it does not collide with the wall of the through hole. The disadvantages of this have already been described above.

The solution according to the invention offers a remedy for this, for example because the arbour only has to be half as long for a certain thread depth thanks to the fabrication of the internal thread from both sides.

In a further preferred embodiment of the first aspect, the first thread segment and the second thread segment are aligned, preferably in radial and/or axial direction relative to each other, using measurement values obtained using a thread inspection tool, preferably a mechanical and/or an optical thread inspection tool, more preferably a thread inspection tool selected from the group consisting of: a contour measuring device, a thread plug gauge, a thread depth gauge, a mechanical profilometer, a coordinate measuring machine, an optical comparator, a 3D optical scanner, a laser scanner, a vision measurement system, and a laser profilometer. More preferably, the thread inspection tool is a coordinate measuring machine.

The thread inspection tool may comprise several of the tools listed. Multiple different tools may be used to obtain measurement values.

A contour measuring device traces the surface profile of an object by moving a stylus along its contours, to measure dimensional shapes and surface features. A thread plug gauge, also called a Go/No-Go gauge, is used to verify the accuracy and fit of internal threads in a component by testing their engagement and compliance with specified tolerances. A thread depth gauge measures the depth of internal threads to ensure they meet the required specifications for proper fastener engagement. A mechanical profilometer is an instrument that uses a stylus to physically trace a material's surface, measuring its profile and roughness. A coordinate measuring machine, or CMM, employs a probe to precisely measure the dimensions, geometry, and positions of components in three-dimensional space. It is capable of using a point-to-point method to capture discrete measurements. An optical comparator, or profile projector, magnifies and projects a part's silhouette onto a screen for visual inspection and dimensional comparison against design specifications. A 3D optical scanner captures detailed three-dimensional shapes and dimensions of objects using structured light or lasers. Similarly, a laser scanner employs laser beams to capture the 3D geometry and surface details of objects with high precision. A vision measurement system, also known as a machine vision system, uses cameras and image processing software to measure and inspect components without contact. Lastly, a laser profilometer, sometimes referred to as an optical profilometer, uses laser technology to measure surface topography and roughness.

Preferably, the thread inspection tool is a contour measuring device. Such devices are available, for example, from companies such as Optacom and Zeiss.

In a further preferred embodiment of the first aspect of the invention, the method further comprises a step of determining at least one deviation value, preferably at least one deviation value selected from the group comprising or consisting of:
- an axial distance between the first thread segment and the second thread segment, in particular between an end point of the first thread segment and an end point of the second thread segment;
- a rotational offset angle between the first thread segment and the second thread segment;
- a radial distance between a longitudinal axis of the first thread segment and a longitudinal axis of the second thread segment;
- a radial distance between a longitudinal axis of the through hole and a longitudinal axis of the first thread segment and/or between a longitudinal axis of the through hole and a longitudinal axis of the second thread segment;
- an angular offset between a longitudinal axis of the first thread segment and a longitudinal axis of the second thread segment;
- an angular offset between a longitudinal axis of the through hole and a longitudinal axis of the first thread segment and/or between a longitudinal axis of the through hole and a longitudinal axis of the second thread segment;
- a difference between a radial depth of the first thread segment and a radial depth of the second thread segment;
- a difference between a diameter of the first thread segment and a diameter of the second thread segment, in particular diameters selected from the group consisting of: outer diameter, core diameter, and flank diameter;
- a difference between a pitch of the first thread segment and a pitch of the second thread segment;
- a cumulative pitch error of the first thread segment and/or the second thread segment;
- a difference between a lead of the first thread segment and a lead of the second thread segment;
- a difference between a lead angle of the first thread segment and a lead angle of the second thread segment;
- a difference between a thread form of the first thread segment and a thread form of the second thread segment; and
- combinations thereof.

Preferably, at least one deviation value, more preferably a majority of the deviation values, most preferably all deviation values of the list above is/are determined.

The step of determining the at least one deviation value is performed at least once, preferably multiple times. The at least one deviation value is used for aligning the first and second thread segments, preferably in radial and/or axial direction relative to each other. Optionally, the at least one deviation value is determined based on measurement values from a thread inspection tool.

More preferably, at least one deviation value is determined selected from the group consisting of:
- an axial distance between the first thread segment and the second thread segment, in particular between an end point of the first thread segment and an end point of the second thread segment; and
- a radial distance between a longitudinal axis of the first thread segment and a longitudinal axis of the second thread segment.

The group of deviation values also includes values that can be calculated from the specified deviation values and values from which the specified deviation values can be calculated.

The determination of the at least one deviation value may comprise determining a spatial direction of a deviation; and/or the deviation value may be linked to a spatial direction of a deviation. By way of example, if a deviation is detected in the radial direction between the longitudinal axis of the first thread segment and the longitudinal axis of the second thread segment, the spatial direction of the deviation may also be identified, for example in relation to a coordinate system of an apparatus performing the method.

As can be seen from the list of possible deviation values, not only may the thread segments be aligned relative to each other (e.g. the position of their longitudinal axes), but also one thread segment to the through hole in each case. In addition, when determining the deviation values for alignment, values of the through hole relative to the workpiece and values of the workpiece relative to the apparatus (for example, a relative position of the workpiece) can be determined.

As outlined above, by way of example, a coarse machining step of the first thread segment and of the second thread segment may be performed, followed by a step of determining at least one deviation value, followed by a fine machining step of the first thread segment and of the second thread segment. The steps may be repeated multiple times.

It has been found that a particularly good and efficient alignment of the first and second thread segments can be achieved by determining the aforementioned deviation values.

In a further preferred embodiment of the first aspect of the invention, an aspect ratio between a depth and a diameter of the through hole is at least 5:1, preferably at least 10:1, more preferably at least 15:1, most preferably at least 20:1.

The aspect ratio refers to the dimensions of the through hole before the internal thread is produced.

With these aspect ratios and higher, the efficient production of internal threads is particularly challenging. However, the solution according to the invention enables the production of such internal threads.

In another preferred embodiment of the first aspect, an internal surface of the through hole of the workpiece is made of at least one material selected from the group consisting of: hardened high-speed steel, a carbide, stainless steel, D2 tool steel, A2 tool steel, a titanium alloy, a sintered metal, and hardened cast iron; preferably selected from the group consisting of: hardened high-speed steel, stainless steel, and a carbide.

In the context of the present invention, the internal surface refers to the portion of the workpiece that is machined by the threading tool during the production of the internal thread. The region therefore relates not only to the outermost layer of the surface, but also includes the part of the workpiece which extends radially into the workpiece starting from the surface of the through hole. The entire workpiece may be made of or comprise the material of the internal surface of the through hole.

Hardened high-speed steel (HSS) is a high-performance alloy known for its ability to retain hardness and sharpness even under high temperatures. Carbides (preferably selected from the group consisting of: tungsten carbide, titanium carbide, tantalum carbide, chromium carbide, vanadium carbide, and silicon carbide) are extremely hard materials composed of carbon and a metallic element, often used as cemented carbides, where carbide particles are bonded with a metallic binder. Stainless steel (inox) is a corrosion-resistant steel alloy containing chromium and is preferably hardened to improve its strength and durability. D2 tool steel (DIN 1.2379 or AISI D2) is a high-carbon, high-chromium tool steel recognised for its exceptional hardness and resistance to wear. A2 tool steel (DIN 1.2363 or AISI A2) is an air-hardening tool steel that offers a balance of toughness and dimensional stability, making it versatile for precision tools. Titanium alloys (preferably Ti-6Al-4V) are lightweight and strong materials that resist corrosion effectively and are preferably used in their hardened form to ensure greater durability. Sintered metals (PM, powder metallurgy materials) are produced by compacting and heating powdered metal, creating a solid mass with precise dimensions and reliable mechanical properties. Hardened cast iron (white cast iron) is a cast iron alloy treated to increase its hardness and resistance to wear, achieved through heat treatment or alloying with elements like chromium.

Creating high aspect ratio internal threads in these hard materials is particularly challenging due to their resistance to deformation and high tool wear during machining. This makes processing more difficult and the selection of threading tools that can be used is severely restricted. The hardness of these materials, which directly influences their machinability, can be measured using standardised test methods. The Rockwell hardness test (e.g., ISO 6508-1:2023, ASTM E18-24) is commonly used for tool steels and hardened materials, while the Vickers hardness test (e.g., ISO 6507-1:2023, ASTM E92-23) provides precise measurements suitable for thin coatings or very hard substances like carbides. For coarser-grained materials like cast iron, the Brinell hardness test (e.g., ISO 6506-1:2014, ASTM E10-23) is ideal due to its larger indentation and broader coverage of heterogeneous structures.

As described above, the present invention provides a solution for producing internal threads with a high aspect ratio for these hard materials.

In a further preferred embodiment of the invention, a final radial distance between a longitudinal axis of the first thread segment and a longitudinal axis of the second thread segment is at most 20 µm, preferably at most 15 µm, more preferably at most 10 µm, even more preferably at most 5 µm, most preferably at most 2 µm. Alternatively or additionally, a final axial distance between the first thread segment and the second thread segment is at most 20 µm, preferably at most 15 µm, more preferably at most 10 µm, even more preferably at most 5 µm, most preferably at most 2 µm.

With the method according to the invention, the above-mentioned accuracies are achieved even with high aspect ratios of the through hole and even with the above-mentioned materials.

A closely related second aspect of the invention relates to an apparatus, preferably a computerised numerical control (CNC) machine, for producing an internal thread in a through hole of a workpiece, preferably according to a method of the first aspect of the invention.

The apparatus comprises a threading tool or means to connect a threading tool mechanically and/or electronically to the apparatus. Preferably, an angle between a longitudinal axis of the threading tool and a vertical machining position is less than 5°, preferably is less than 3°, more preferably is less than 1°, most preferably is essentially 0° during the internal thread producing process.

The apparatus further comprises means for displacing and rotating the workpiece relative to the threading tool so as to enable the machining of a first thread segment of the internal thread from a first opening of the through hole; and to enable the machining of a second thread segment of the internal thread from the second opening of the through hole.

The apparatus also comprises a thread inspection tool to obtain at least one measurement value for aligning a first and second thread segment, preferably in radial and/or axial direction relative to each other, or means to connect said thread inspection tool mechanically and electronically to the apparatus. Preferably, the thread inspection tool is a mechanical and/or an optical thread inspection tool, more preferably a thread inspection tool selected from the group consisting of: a contour measuring device, a thread plug gauge, a thread depth gauge, a mechanical profilometer, a coordinate measuring machine, an optical comparator, a 3D optical scanner, a laser scanner, a vision measurement system, and a laser profilometer.

Preferably, the apparatus is controlled or controllable via a human-machine interface (HMI). Through the HMI, an operator can input parameters, monitor processes, and make adjustments. It acts as a bridge between the operator and the machine's control system.

The workpiece is not part of the apparatus. If the apparatus comprises merely means to connect a threading tool mechanically and/or electronically to the apparatus, the apparatus does not comprise the threading tool. If the apparatus comprises merely means to connect a thread inspection tool mechanically and/or electronically to the apparatus, the apparatus does not comprise the thread inspection tool.

By way of example, means to connect a threading tool to the apparatus mechanically and/or electronically comprise: a tool holder, a collet chuck, an arbour, a spindle interface (e.g., a Hohlschaftkegel (HSK) interface, an International Organization for Standardisation (ISO) interface, a big taper (BT)), a quick-change tool system, a modular tooling system, a torque wrench, alignment pins, an electrical connector, a data transfer port, a tool pre-setter interface, a wireless connection (e.g., Wi-Fi, Bluetooth), a radio-frequency identification (RFID) tag system, and combinations thereof.

By way of example, means to connect a thread inspection tool to the apparatus mechanically and/or electronically comprise: a probe holder, a magnetic mount, a quick-change adapter, an optical sensor mount, a touch probe interface, a machine vision system interface, a data acquisition port, a universal serial bus (USB) connection, a wireless module (e.g., Wi-Fi, Bluetooth), a digital measurement encoder, a tool pre-setter mount, a programmable logic controller (PLC) interface, an Internet-of-Things-(IoT)-enabled connector, and combinations thereof.

By way of example, means for displacing and rotating the workpiece relative to the threading tool comprise: a linear motor, a ball screw, a rack-and-pinion system, a stepper motor, a servo motor, a rotary table, an indexing table, a cam mechanism, a pneumatic actuator, a hydraulic actuator, a belt drive, a chain drive, a worm gear drive, a swivel head system, a robotic arm, a linear actuator (e.g., electric, pneumatic, or hydraulic), a rotary actuator (e.g., electric, pneumatic, or hydraulic), a piezoelectric actuator, a direct drive motor, and combinations thereof.

The apparatus according to the invention of the second aspect is suitable for producing high aspect ratio internal threads for the same reasons as for the method of the first aspect. The challenges, conditions and advantages have already been described above. The preferred embodiments of the first aspect also apply to the second aspect.

In particular, in the apparatus of the prior art, the workpiece is fixed in the apparatus such that it is not possible to machine an internal thread in a through-hole from both sides of the through-hole without having to manually remove the workpiece from the apparatus to rotate the workpiece.

In a preferred embodiment of the apparatus of the second aspect of the invention, the apparatus further comprises a data processing system or is communicatively connected with a data processing system comprising means to cause the apparatus to carry out the method of the first aspect of the invention.

The data processing system may be communicatively connected to the apparatus to exchange data by a wired connection (e.g., Ethernet, USB), a wireless connection (e.g., Wi-Fi, Bluetooth, NFC, 5G/LTE cellular network), industrial protocols (e.g., PROFINET, Modbus, OPC UA, MQTT), system integrations (e.g., IoT-enabled cloud connection, SCADA system connection), or combinations thereof.

In a preferred embodiment of the method of the first aspect or the apparatus of the second aspect of the invention, the threading tool is a thread grinding tool, preferably a thread grinding tool with a grinding wheel comprising or consisting of at least one of the materials selected from the group consisting of: corundum, cubic boron nitride, diamond, and a metal.

The grinding tool is attached to a spindle.

Grinding wheels for thread grinding tools may be made of corundum (aluminium oxide), known for its hardness, durability, and suitability for high-speed grinding of steel and other metals. Cubic boron nitride (CBN) is a hard material, second only to diamond, ideal for grinding hard ferrous materials with excellent thermal and chemical stability. Diamond is used for precision grinding of non-ferrous materials, ceramics, and composites where high sharpness and precision are required. Metals include bronze, copper alloys, cobalt, nickel, iron, steel, or tungsten carbide-based binders. Preferably, the metal is a galvanised (electroplated) metal, for example galvanised nickel, copper, or cobalt.

Specific examples of thread grinding tools are:
- corundum grinding wheels;
- corundum CBN grinding wheels;
- metal bound CBN / Diamond grinding wheels; and
- galvanic bound CBN/Diamond grinding wheels.

The first two examples are dressable (i.e. reshaped and cleaned to restore their cutting efficiency and maintain precise dimensions) without removing them from the apparatus.

A closely related third aspect of the invention relates to a computer-implemented method for controlling an apparatus for producing an internal thread in a through hole of a workpiece, preferably an apparatus according to the second aspect of the invention. The method comprises the steps of:
a) sending instructions to the apparatus to perform a coarse machining step of a first thread segment of the internal thread from a first opening of the through hole, preferably to a first radial depth, wherein the first radial depth is smaller than a final radial depth of the internal thread;
b) sending instructions to the apparatus to perform a coarse machining step of a second thread segment of the internal thread from a second opening of the through hole, preferably to the first radial depth;
c) receiving measurement values from a thread inspection tool;
d) determining at least one deviation value between the first and second thread segments based on the measurement values obtained and preferably based on target values of the internal thread;
e) sending instructions to the apparatus to perform a fine machining step of the first thread segment, wherein the instructions are such that the at least one deviation value determined is to be reduced, preferably the first thread segment is machined to a second radial depth in the fine machining step, wherein the second radial depth is higher than the first radial depth; and
f) sending instructions to the apparatus to perform a fine machining step of the second thread segment, wherein the instructions are such that the at least one deviation value determined is to be reduced, preferably the second thread segment is machined to the second radial depth in the fine machining step.

The skilled person will understand that certain steps of the method do not have to be carried out in the order given. For example, steps a) and b) may also be interchanged; or steps e) and f) may be interchanged.

The method may involve the communication and integration of a Human-Machine Interface (HMI) with the CNC and PLC systems to control the apparatus. The HMI may generate CNC codes in real time, which are transmitted to the CNC system to direct the movements of the apparatus's axes. The CNC code may be dynamically generated online within the HMI and seamlessly integrated into the CNC system.

The system may employ C# as the primary programming language for code generation and machine communication. Communication between machines, or between a machine and a central control system, may be facilitated through various bus systems, enabling synchronised operations and enhanced data exchange.

The preferred embodiments of the preceding aspects of the invention also apply to the method of the third aspect.

The measuring (related to step c)), receiving (step c)) and machining (related to steps a), b), e), and f)) can be repeated multiple times, either to a certain number of repetitions, or up to a certain tolerance.

The deviation values and measurement values of steps c) and d) have been described above. Target values may be values within predefined tolerances of the measurement values and/or deviation values.

In steps e) and f), by way of example, if an axial distance is determined as a deviation value which is outside of a predefined range, the instruction sent to the apparatus are such that the threading tool's position is adjusted to bring the deviation value closer to or within the predefined range.

The invention according to the first to third aspects is particularly valuable for the manufacture of electric actuators, in particular robotic electric actuators. In the field of actuators, especially robotic actuators, electric actuators are becoming increasingly attractive compared to hydraulic actuators. This is because they are characterised in particular by their high precision, simple control, space savings, and high speed. Hydraulic systems also have the disadvantage of possible leaks.

However, such electric actuators, especially robotic electric actuators, require internal threads with a high depth-to-diameter ratio. It has been difficult to produce such internal threads using prior art methods and apparatuses. The method and apparatus according to the invention are therefore particularly suitable in the manufacturing process of electric actuators, in particular robotic electric actuators.

The workpiece which is processed in the method according to the invention and/or by the apparatus according to the invention is therefore preferably a workpiece which is further processed (after the producing the internal thread) for the production of an electric actuator, in particular a robotic electric actuator.

A seventh aspect of the invention relates to a method for producing an electric actuator (preferably a robotic electric actuator). The method comprises producing an internal thread in a through hole of a workpiece using a threading tool (preferably a thread grinding tool). The internal thread is produced with a method according to the first or third aspect of the invention. Additionally or alternatively, the internal thread is produced with an apparatus according to the second aspect.

An eighth aspect of the invention relates to the use of an apparatus according to the second aspect for producing an electric actuator, preferably a robotic electric actuator, or an intermediate product of an electric actuator, preferably a robotic electric actuator.

A ninth aspect relates to the use of a thread inspection tool in an apparatus, preferably in a computerised numerical control machine and/or in an apparatus according to the second aspect, for producing an electric actuator, preferably a robotic electric actuator, or an intermediate product of an electric actuator, preferably a robotic electric actuator. The thread inspection tool is preferably a mechanical and/or an optical thread inspection tool, more preferably a thread inspection tool selected from the group consisting of: a contour measuring device, a thread plug gauge, a thread depth gauge, a mechanical profilometer, a coordinate measuring machine, an optical comparator, a 3D optical scanner, a laser scanner, a vision measurement system, and a laser profilometer.

In the context of the present invention, an intermediate product of an electric actuator is a partially manufactured component or assembly intended for further processing or integration into a final actuator. It is not yet fully functional as an actuator by itself.

A fourth aspect of the invention relates to a data processing system. The data processing system comprises means to cause an apparatus, preferably the apparatus of the second aspect of the invention, to carry out the method of the first or seventh aspect of the invention. Additionally or alternatively, the data processing system comprises means for carrying out the method of the third aspect of the invention.

A fifth aspect of the invention relates to a computer program . The computer program comprises instructions which, when the program is executed by a computer that is communicatively connected to an apparatus, preferably the apparatus of the second aspect of the invention, cause the apparatus to carry out the method of first or seventh aspect of the invention. Additionally or alternatively, the computer program comprises instructions which, when the program is executed by a computer, cause the computer to carry out the method of the third aspect of the invention.

A sixth aspect of the invention relates to a computer-readable medium. The computer-readable medium comprises instructions which, when the program is executed by a computer that is communicatively connected to an apparatus, preferably the apparatus of the second aspect of the invention, cause the apparatus to carry out the method of the first or seventh aspect of the invention. Additionally or alternatively, the computer-readable medium comprises instructions which, when executed by a computer, cause the computer to carry out the method of the third aspect of the invention.

The invention will now be described by way of more specific embodiments. These embodiments are not intended to limit the gist of the invention in any way, but rather serve to ease understanding of the invention.
- Figure 1:: illustrative cross-sectional side view of a workpiece 3 comprising a through hole 2 before producing an internal thread 1;
- Figure 2:: illustrative cross-sectional side view of a workpiece 3 and a threading tool 13 at an angle 11 before producing an internal thread 1;
- Figure 3:: illustrative cross-sectional side view of a workpiece 3 after producing a first thread segment 4 from an internal thread 1;
- Figure 4:: illustrative cross-sectional side view of a workpiece 3 during and/or after producing an internal thread 1; A: with a radial distance 17 between a first thread segment 4 and a second thread segment 6; B: with an axial distance 15 between a first thread segment 4 and a second thread segment; and C: with an angular offset 16 between a first thread segment 4 and a second thread segment; and
- Figure 5:: illustrative cross-sectional side view of a workpiece 3 after producing an internal thread 1 comprising a first thread segment 4 and a second thread segment 6.

The hatched areas in all Figures denote the solid material of the object that has been 'cut through' along the section plane. The length ratios in the Figures are not shown proportionally.

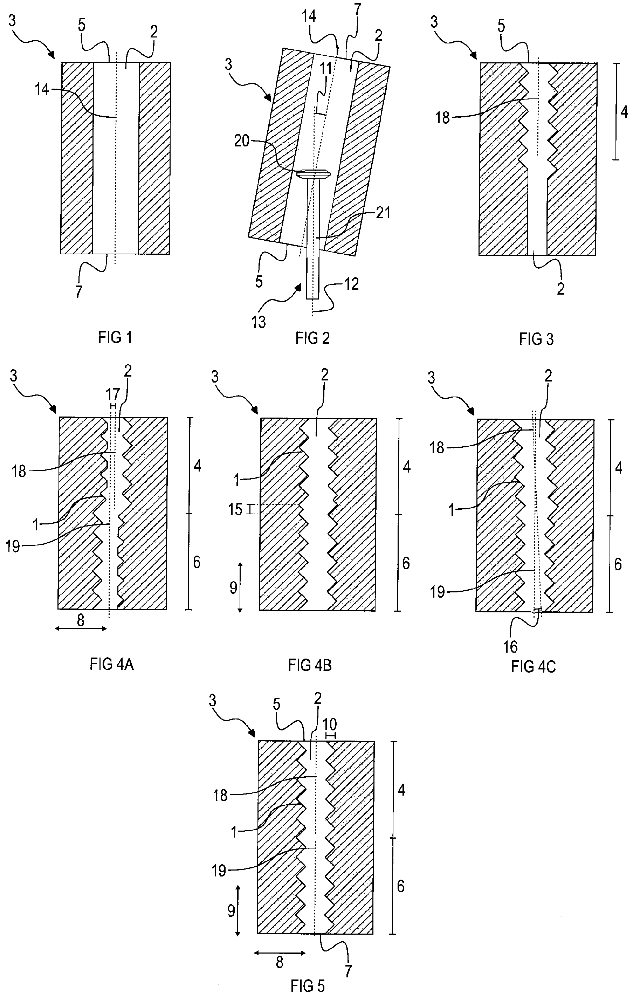

Figure 1 shows an illustrative cross-sectional side view of a workpiece 3 comprising a cylindrical through hole 2 with a longitudinal axis 14. The through hole has a first opening 5 and a second opening 7. The workpiece 3 consists of a hard material, such as hardened high-speed steel (HSS). An internal thread 1 is to be machined on the wall of the through hole 2.

In the present example, the internal thread 1 is machined with a thread grinding tool 13, which is mechanically and electronically connected to a computerised numerical control (CNC) machine. The CNC machine comprises further components known in the art required for internal thread grinding, such as support means for holding a workpiece, a spindle carrying the grinding tool 13, bearing means for rotatably mounting the spindle, driving means for rotating the spindle, and feeding means for effecting relative movement between the support means and the spindle to enable the grinding tool 13 to effect grinding of an internal thread 1 in the through hole 2 of the workpiece 3. The thread grinding tool 13 comprises a grinding wheel 20 attached to an arbour 21, as illustrated in Figure 2. During thread grinding, the longitudinal axis 14 of the through hole 2 is arranged at an angle 11 relative to the longitudinal axis 12 of the thread grinding tool 13.

The through hole 2 of the workpiece 3 of the present example has a high aspect ratio between the depth and the diameter of the through hole 2, such as an aspect ratio of 20:1. In the prior art grinding methods and apparatuses (such as in EP 0333352 A2 (SEIKO SEIKI KABUSHIKI KAISHA, 20 September 1989)), the grinding wheel 20 is mounted on a long, thin arbour 21 to accommodate for the high aspect ratio of the through hole 2. As illustrated schematically in Figure 2, however, even if such a thread grinding tool 13 is selected, the arbour 21 will touch the edge of the first opening 5 at a certain depth in the through hole 2, since the through hole 2 and the grinding tool 13 are at an angle 11 to each other.

In accordance with the present invention, however, the apparatus is configured such that it can rotate the workpiece 3 relative to the thread grinding tool 13 such that the through hole 2 can be machined from both the first opening 5 and the second opening 7. In particular, the workpiece 3 can be rotated by 180° so that before rotation the first opening 5 faces the thread grinding tool 13 and after rotation the second opening 7 faces the thread grinding tool 13. This enables the production of high aspect ratio internal threads 1; in fact, the aspect ratio made possible in this way can be doubled for a specific internal thread 1 and for thread grinding tool 13 combination. However, the arbour 21 can also be made thicker than in the prior art methods, for example, in order to increase the possible speed and thus the throughput, and to reduce vibrations and thus increase accuracy.

Furthermore, in the prior art grinding methods and apparatuses (such as in EP 0333352 A2 (SEIKO SEIKI KABUSHIKI KAISHA, 20 September 1989)), the grinding tool 13 is arranged in a horizontal working position. As outlined above, a horizontal arrangement of the thread grinding tool 13 leads to a larger degree of vibrations due to the gravitational impact, compared to the vertical arrangement of the thread grinding tool 13 of the present invention. This also enables higher grinding speeds and therefore a higher throughput for a given manufacturing precision and/or this enables greater manufacturing precision for a given grinding speed.

The thread grinding process starts by performing a coarse machining step of the first thread segment 4 from the first opening 5 of the through hole 2, as illustrated in Figure 2. The result of this step is shown schematically in Figure 3. The workpiece 3 now comprises a first thread segment 4 with a longitudinal axis 18 in the through hole 2. The workpiece 3 is then rotated and the second thread segment 6 with a longitudinal axis 19 is produced via the second opening 7 in a coarse machining step. The coarse machining steps of the thread segments result in a radial depth of the thread segments that is smaller than a desired final radial depth 10 of the internal thread 1. CNC machines are capable of achieving a certain precision for these coarse machining steps. Nevertheless, the alignment between the first thread segment 4 and the second thread segment 6 is typically not sufficient.

Therefore, the CNC machine includes a thread inspection tool that assesses the alignment between the first thread segment 4 and the second thread segment 6. The thread inspection tool of the present example is a coordinate measuring machine for point-to-point measurements. Among other deviation values outlined above, it determines a radial distance 17 in a radial direction 8 between the longitudinal axis 18 of the first thread segment 4 and the longitudinal axis 19 of the second thread segment 6 (Figure 4A). It also determines an axial distance 15 in axial direction 9 between the first thread segment 4 and the second thread segment 6 (Figure 4B). If these distances are too high, the two thread segments do not overlap smoothly at the inner end points. The thread inspection tool also determines an angular offset 16 between the longitudinal axis 18 of the first thread segment 4 and a longitudinal axis 19 of the second thread segment 6. If any of these values are too high, the grinding parameters are adjusted in the subsequent processing steps to bring the value(s) into a desired tolerance range.

After determining the above and potentially further deviation values, a fine machining step of both the first thread segment 4 and the second thread segment 6 is performed, thereby adjusting the relative position and movements between the workpiece 3 and the thread grinding tool 13 in order to bring the first thread segment 4 and the second thread segment 6 in better alignment. The process of determining deviation values, followed by further machining steps of the thread segments is repeated until the first thread segment 4 and the second thread segment 6 are in alignment, meaning that all the required deviation values are within a predefined tolerance range.

Alignment is thereby achieved by the fact that a subsequent machining step leads to a greater radial depth of the internal thread 1 than a previous machining step. This allows undesirable deviations to be corrected iteratively. The last machining step leads to the final radial depth 10 of the internal thread 1. The different radial depths after individual steps are not shown in the Figures.

Figure 5 shows a schematic cross-section of the workpiece 3 after the internal thread 1 has been completed in the through hole 2. The longitudinal axes 18, 19 of the thread segments are aligned in radial direction 8, and the thread segments are aligned in axial direction 9. The internal thread 1 is now a continuous thread without an interfering transition between the first thread segment 4 and the second thread segment 6.

## Claims

1. A method for producing an internal thread (1) in a through hole (2) of a workpiece (3) using a threading tool (13), preferably a thread grinding tool, the method comprising the steps of:
- machining a first thread segment (4) of the internal thread (1) from a first opening (5) of the through hole (2); and
- machining a second thread segment (6) of the internal thread (1) from a second opening (7) of the through hole (2);
wherein the machining of the first thread segment (4) and second thread segment (6) is performed such that the first and second thread segments (4, 6) are aligned, preferably in radial and/or axial directions (8, 9) relative to each other.

2. The method of claim 1, wherein the first thread segment (4) and the second thread segment (6) are aligned, preferably in radial and/or axial directions (8, 9) relative to each other, by
- performing a coarse machining step of the first thread segment (4);
- performing a coarse machining step of the second thread segment (6);
- performing a fine machining step of the first thread segment (4); and
- performing a fine machining step of the second thread segment (6);
wherein at least one deviation value determined after performing the coarse machining steps is reduced by performing the fine machining steps.

3. The method of any one of claims 1 to 2, wherein the first thread segment (4) is machined to a coarse radial depth in a or the coarse machining step of the first thread segment (4), and the second thread segment (6) is machined to the coarse radial depth in a or the coarse machining step of the second thread segment (6); wherein the coarse radial depth is smaller than a final radial depth (10) of the internal thread (1).

4. The method of any one of claims 1 to 3, wherein an angle between a longitudinal axis (12) of the threading tool (13) and a vertical machining position is less than 5°, preferably is less than 3°, more preferably is less than 1°, most preferably is essentially 0° during the machining of the first and second thread segments (4, 6).

5. The method of any one of claims 1 to 4, wherein a longitudinal axis (12) of the threading tool (13) and a longitudinal axis (14) of the through hole (2) are not parallel, preferably an angle (11) between the longitudinal axis (12) of the threading tool (13) and the longitudinal axis (14) of the through hole (2) is at least 0.01°, preferably is at least 0.1°, more preferably is at least 1°, even more preferably is at least 10°, most preferably at least 20°.

6. The method of any one of claims 1 to 5, wherein the first thread segment (4) and the second thread segment (6) are aligned, preferably in radial and/or axial direction (8, 9) relative to each other, using measurement values obtained using a thread inspection tool, preferably a mechanical and/or an optical thread inspection tool, more preferably a thread inspection tool selected from the group consisting of: a contour measuring device, a thread plug gauge, a thread depth gauge, a mechanical profilometer, a coordinate measuring machine, an optical comparator, a 3D optical scanner, a laser scanner, a vision measurement system, and a laser profilometer.

7. The method of any one of claims 1 to 6, wherein the method further comprises a step of determining at least one deviation value, preferably at least one deviation value selected from the group comprising or consisting of:
- an axial distance (15) between the first thread segment (4) and the second thread segment (6), in particular between an end point of the first thread segment (4) and an end point of the second thread segment (6);
- a rotational offset angle between the first thread segment (4) and the second thread segment (6);
- a radial distance (17) between a longitudinal axis (18) of the first thread segment (4) and a longitudinal axis (19) of the second thread segment (6);
- a radial distance between a longitudinal axis (14) of the through hole (2) and a longitudinal axis (18) of the first thread segment (4) and/or between a longitudinal axis (14) of the through hole (2) and a longitudinal axis (19) of the second thread segment (6);
- an angular offset (16) between a longitudinal axis (18) of the first thread segment (4) and a longitudinal axis (19) of the second thread segment (6);
- an angular offset between a longitudinal axis (14) of the through hole (2) and a longitudinal axis (18) of the first thread segment (4) and/or between a longitudinal axis (14) of the through hole (2) and a longitudinal axis (19) of the second thread segment (6);
- a difference between a radial depth of the first thread segment (4) and a radial depth of the second thread segment (6);
- a difference between a diameter of the first thread segment (4) and a diameter of the second thread segment (6), in particular diameters selected from the group consisting of: outer diameter, core diameter, and flank diameter;
- a difference between a pitch of the first thread segment (4) and a pitch of the second thread segment (6);
- a cumulative pitch error of the first thread segment (4) and/or the second thread segment (6);
- a difference between a lead of the first thread segment (4) and a lead of the second thread segment (6);
- a difference between a lead angle of the first thread segment (4) and a lead angle of the second thread segment (6);
- a difference between a thread form of the first thread segment (4) and a thread form of the second thread segment (6); and
- combinations thereof;
wherein
- the step of determining the at least one deviation value is performed at least once, preferably multiple times;
- the at least one deviation value is used for aligning the first and second thread segments (4, 6), preferably in radial and/or axial direction (8, 9) relative to each other; and
- optionally, the at least one deviation value is determined based on measurement values from a thread inspection tool.

8. The method of any one of claims 1 to 7, wherein an internal surface of the through hole (2) of the workpiece (3) is made of at least one material selected from the group consisting of: hardened high-speed steel, a carbide, stainless steel, D2 tool steel, A2 tool steel, a titanium alloy, a sintered metal, and hardened cast iron; preferably selected from the group consisting of: hardened high-speed steel, stainless steel, and a carbide.

9. The method of any one of claims 1 to 8, wherein
- a final radial distance (17) between a longitudinal axis (18) of the first thread segment (4) and a longitudinal axis (19) of the second thread segment (6) is at most 20 µm, preferably at most 15 µm, more preferably at most 10 µm, even more preferably at most 5 µm, most preferably at most 2 µm; and/or
- a final axial distance (15) between the first thread segment (4) and the second thread segment (6) is at most 20 µm, preferably at most 15 µm, more preferably at most 10 µm, even more preferably at most 5 µm, most preferably at most 2 µm.

10. An apparatus, preferably a computerised numerical control machine, for producing an internal thread (1) in a through hole (2) of a workpiece (3), preferably according to a method of any one of claims 1 to 9 or 11, the apparatus comprising:
- a threading tool (13) or means to connect a threading tool (13) mechanically and/or electronically to the apparatus, preferably wherein an angle between a longitudinal axis (12) of the threading tool (13) and a vertical machining position is less than 5°, preferably is less than 3°, more preferably is less than 1°, most preferably is essentially 0° during the internal thread (1) producing process;
- means for displacing and rotating the workpiece (3) relative to the threading tool (13) so as
- to enable the machining of a first thread segment (4) of the internal thread (1) from a first opening (5) of the through hole (2); and
- to enable the machining of a second thread segment (6) of the internal thread (1) from the second opening (7) of the through hole (2); and
- a thread inspection tool to obtain at least one measurement value for aligning a first and second thread segment (4, 6), preferably in radial and/or axial direction (8, 9) relative to each other, or means to connect a thread inspection tool mechanically and/or electronically to the apparatus; preferably, the thread inspection tool is a mechanical and/or an optical thread inspection tool, more preferably a thread inspection tool selected from the group consisting of: a contour measuring device, a thread plug gauge, a thread depth gauge, a mechanical profilometer, a coordinate measuring machine, an optical comparator, a 3D optical scanner, a laser scanner, a vision measurement system, and a laser profilometer.

11. The method of any one of claims 1 to 9, or the apparatus of claim 10, wherein the threading tool (13) is a thread grinding tool (13), preferably a thread grinding tool (13) with a grinding wheel (20) comprising or consisting of at least one of the materials selected from the group consisting of: corundum, cubic boron nitride, diamond, and a metal.

12. A computer-implemented method for controlling an apparatus for producing an internal thread (1) in a through hole (2) of a workpiece (3), preferably an apparatus according to any one of claims 10 to 11, the method comprising the steps of:
a. sending instructions to the apparatus to perform a coarse machining step of a first thread segment (4) of the internal thread (1) from a first opening (5) of the through hole (2), preferably to a first radial depth, wherein the first radial depth is smaller than a final radial depth (10) of the internal thread (1);
b. sending instructions to the apparatus to perform a coarse machining step of a second thread segment (6) of the internal thread (1) from a second opening (7) of the through hole (2), preferably to the first radial depth;
c. receiving measurement values from a thread inspection tool;
d. determining at least one deviation value between the first and second thread segments (4, 6) based on the measurement values obtained and preferably based on target values of the internal thread;
e. sending instructions to the apparatus to perform a fine machining step of the first thread segment (4), wherein the instructions are such that the at least one deviation value determined is to be reduced, preferably the first thread segment (4) is machined to a second radial depth in the fine machining step, wherein the second radial depth is higher than the first radial depth; and
f. sending instructions to the apparatus to perform a fine machining step of the second thread segment (6), wherein the instructions are such that the at least one deviation value determined is to be reduced, preferably the second thread segment (6) is machined to the second radial depth in the fine machining step.

13. A method for producing an electric actuator, preferably a robotic electric actuator, wherein the method comprises producing an internal thread (1) in a through hole (2) of a workpiece (3) using a threading tool (13), preferably a thread grinding tool, wherein the internal thread (1) is produced with:
- a method according to any one of claims 1 to 9 or 11; and/or
- an apparatus according to any one of claims 10 to 11.

14. A data processing system
- comprising means to cause an apparatus, preferably the apparatus of any one of claims 10 to 11, to carry out the method of any one of claims 1 to 9, 11, or 13; and/or
- comprising means for carrying out the method of claim 12.

15. A computer program
- comprising instructions which, when the program is executed by a computer that is communicatively connected to an apparatus, preferably the apparatus of any one of claims 10 to 11, cause the apparatus to carry out the method of any one of claims 1 to 9, 11, or 13; and/or
- comprising instructions which, when the program is executed by a computer, cause the computer to carry out the method of claim 12.

16. A computer-readable medium
- comprising instructions which, when the program is executed by a computer that is communicatively connected to an apparatus, preferably the apparatus of any one of claims 10 to 11, cause the apparatus to carry out the method of any one of claims 1 to 9, 11, or 13; and/or
- comprising instructions which, when executed by a computer, cause the computer to carry out the method of claim 12.

17. Use of an apparatus according to any one of claims 10 to 11 for producing an electric actuator, preferably a robotic electric actuator, or an intermediate product of an electric actuator, preferably a robotic electric actuator.

18. Use of a thread inspection tool in an apparatus, preferably in a computerised numerical control machine and/or in an apparatus according to any one of claims 10 to 11, for producing an electric actuator, preferably a robotic electric actuator, or an intermediate product of an electric actuator, preferably a robotic electric actuator; wherein the thread inspection tool is preferably a mechanical and/or an optical thread inspection tool, more preferably a thread inspection tool selected from the group consisting of: a contour measuring device, a thread plug gauge, a thread depth gauge, a mechanical profilometer, a coordinate measuring machine, an optical comparator, a 3D optical scanner, a laser scanner, a vision measurement system, and a laser profilometer.
